# EUROPEAN PATENT APPLICATION

(11) **EP 4 592 108 A1**
(43) Date of publication of application: **30.07.2025**
(21) Application number: 24222392.3
(22) Date of filing: 20.12.2024
(51) Int. Cl.: B60H 1/32, F24F 11/41, B60H 1/00, F25D 21/02

(54) **FROST DETECTION AND DEFROST CONTROL**

(30) Priority: 30.12.2023 IN 202341090181
(71) Applicant: Thermo King LLC, Minneapolis, MN 55420 (US)
(72) Inventor: G, Venkatesh, Minneapolis, Minnesota, 55420 (US); SUBRAHMANYA, Praveena Alangar, Minneapolis, Minnesota, 55420 (US); BERTILS, Andrew, Minneapolis, Minnesota, 55420 (US)
(74) Representative: Haseltine Lake Kempner LLP

(57) **Abstract**

A system and a method to detect frost in an evaporator coil are provided. The system includes a controller and a probe. The probe includes one or more electrodes. The probe is attached to a component of an evaporator coil. The probe is configured to transmit detection of environmental condition(s) in proximity to the component of the evaporator coil to the controller. The controller initiates and terminates a defrost operation based on the environmental condition(s) reported by the probe.

## Description

### FIELD

This disclosure relates generally to the detection and remediation of frost in an evaporator that is disposed, for example, in a transport climate control system.

### BACKGROUND

A transport climate control system can include, for example, a transport climate control system (TCS) and/or a heating, ventilation and air conditioning (HVAC) system. A TCS is generally used to control an environmental condition *e.g*., temperature, humidity, air quality, and the like) within a cargo space of a transport unit *e.g.,* a truck, a container (such as a container on a flat car, an intermodal container, *etc.),* a box car, a semi-tractor, a passenger vehicle, or other similar transport unit). The TCS can maintain one or more environmental conditions within the cargo space to maintain the integrity of the cargo, *e.g.,* produce, frozen foods, pharmaceuticals, *etc.* In some embodiments, the transport unit may include an HVAC system to control the climate within the passenger space of the vehicle.

The presence of frost and/or ice on various components of the TCS, *e.g*., evaporator coils, is detrimental to efficient operation and maintenance of such components. Currently, to detect the presence of frost and/or ice, a delta T measurement is made between return and discharge of an evaporator and then compared to a table of expected values. If the delta T differs from the expected values by more than an acceptable threshold value, frost buildup may be assumed.

### SUMMARY

This disclosure relates generally to maintaining one or more environmental conditions for efficient climate control in, *e.g.,* a transport climate control system, including but not limited to those having a central evaporator and one or more remote evaporators.

The embodiments described herein can increase precision to initiation and termination of a defrost operation of the transport climate control system and thereby reduce energy used during the defrost operation.

Also, in multi-zone climate control applications where there is a host climate control unit and one or more remote climate control units each having a remote evaporator, the embodiments described herein can use one or more frost detecting probes on the different evaporators to determine a sequence of defrost operations for efficient defrost of all of the evaporators.

In accordance with at least one non-limiting example embodiment, a system to detect frost in an evaporator coil includes a controller and a probe. The probe has one or more electrodes, and the probe is attached to a component of an evaporator coil. Also, the probe is configured to transmit detection of one or more environmental conditions in proximity to the component of the evaporator coil to the controller. The controller initiates and terminates a defrost operation based on the environmental condition(s) reported by the probe.

In accordance with at least one other non-limiting example embodiment, a method implemented by a controller to regulate a buildup of frost includes periodically receiving a measured resistance value between a pairing of at least two electrodes from a probe to which the at least two electrodes are configured. In at least one alternative embodiment, a voltage across the probe may be received, with the resistance being determined using Ohm's law. The probe is attached to a component of an evaporator coil and is configured to transmit the measured resistance in proximity to the component of the evaporator coil to the controller. The controller further implements a defrost operation when the periodically received measured resistance value is at least a threshold resistance value, and the controller suspends the defrost operation when the periodically received measured resistance value is below threshold resistance value.

In accordance with at least one other non-limiting example embodiment, a method implemented by a controller to regulate buildup of frost includes periodically receiving a measured resistance between an electrode and a component of an evaporator from a probe to which the electrode is configured. The probe is attached to a component of an evaporator coil, and the probe is configured to transmit the measured resistance in proximity to the component of the evaporator coil to the controller. The controller implements a defrost operation when the periodically received measured resistance is at least a threshold resistance value and implements a defrost operation when the periodically received measured resistance is below threshold resistance value.

In accordance with at least one other non-limiting example embodiment, a frost detecting probe corresponding to a climate controlling component includes one or more electrodes that transmit an environmental condition in proximity to the climate controlling component to a controller to indicate the detection of frost on the climate controlling component to the controller. The controller initiates the defrost operation upon receiving the data indicating the detection of a threshold amount of frost on the component of the evaporator coil. The probe also transmits the environmental condition in proximity to the climate controlling component to the controller indicating reduction of frost on the climate controlling component. The controller also terminates the defrost operation upon receiving the data indicating the detection of a threshold reduction of frost on the climate controlling component.

### BRIEF DESCRIPTION OF THE DRAWINGS

References are made to the accompanying drawings that form a part of this disclosure, and which illustrate embodiments in which the systems and methods described in this Specification can be practiced.
FIG. 1A shows a perspective view of a container that includes a transport climate control system, in accordance with at least one embodiment described and recited herein.
FIG. 1B shows a perspective view of a climate controlled transport unit attached to a tractor, in accordance with at least one embodiment described and recited herein.
FIG. 1C shows a side view of a truck with a transport climate control system, in accordance with at least one embodiment described and recited herein.
FIG. 1D shows a side view of a van with a transport climate control system, in accordance with at least one embodiment described and recited herein.
FIG. 1E shows a perspective view of a passenger vehicle including a transport climate control system, in accordance with at least one embodiment described and recited herein.
FIG. 2 shows a probe for frost detection and defrost control, in accordance with at least one embodiment described and recited herein.
FIG. 3 shows a depiction of an environment for frost detection and defrost control, in accordance with at least one embodiment described and recited herein.
FIG. 4 shows an example of an evaporator coil with multiple probes disposed thereon, in accordance with at least one embodiment described and recited herein.
FIG. 5A, along with FIGS. 5B and 5C, shows a portion of a non-limiting example processing flow of frost detection and defrost controlling, in accordance with at least one embodiment described and recited herein.
FIG. 5B, along with FIGS. 5A and 5C, shows a portion of a non-limiting example processing flow of frost detection and defrost controlling, in accordance with at least one embodiment described and recited herein.
FIG. 5C, along with FIGS. 5A and 5B, shows a portion of a non-limiting example processing flow of frost detection and defrost controlling, in accordance with at least one embodiment described and recited herein.
FIG. 6A, along with FIGS. 6B and 6C, shows a portion of a non-limiting example processing flow of frost detection and defrost controlling, in accordance with at least one embodiment described and recited herein.
FIG. 6B, along with FIGS. 6A and 6C, shows a portion of a non-limiting example processing flow of frost detection and defrost controlling, in accordance with at least one embodiment described and recited herein.
FIG. 6C, along with FIGS. 6A and 6B, is a portion of a non-limiting example processing flow of frost detection and defrost controlling, in accordance with at least one embodiment described and recited herein.
FIG. 7 shows a non-limiting example of a probe attached to an evaporator coil, in accordance with at least one embodiment described and recited herein.
FIG. 8 shows a non-limiting example of a probe attached to an evaporator coil, in accordance with at least one embodiment described and recited herein.
FIG. 9A shows a non-limiting example of a probe, in accordance with at least one alternative embodiment described and recited herein.
FIG. 9B shows the example probe of FIG. 9A mounted on an evaporator coil, in accordance with at least one embodiment described and recited herein.
FIG. 10A shows a non-limiting example of a probe, in accordance with at least one alternative embodiment described and recited herein.
FIG. 10B shows the example probe of FIG. 10A mounted on an evaporator coil, in accordance with at least one embodiment described and recited herein.
FIG. 11A shows a non-limiting example of a probe, in accordance with at least one alternative embodiment described and recited herein.
FIG. 11B shows the example probe of FIG. 11A mounted on an evaporator coil, in accordance with at least one embodiment described and recited herein.

### DETAILED DESCRIPTION

In the following detailed description, reference is made to the accompanying drawings, which form a part of the description. In the drawings, similar symbols typically identify similar components, unless context dictates otherwise. Furthermore, unless otherwise noted, the description of each successive drawing may reference features from one or more of the previous drawings to provide clearer context and a substantive explanation of the current example embodiment. Still, the example embodiments described in the detailed description, drawings, and claims are not intended to be limiting. Other embodiments may be utilized, and other changes may be made, without departing from the spirit or scope of the subject matter presented herein. It will be readily understood that the aspects of the present disclosure, as generally described and recited herein, as well as illustrated in the drawings, may be arranged, substituted, combined, separated, and designed in a wide variety of different configurations, all of which are explicitly contemplated herein.

This disclosure relates generally to the detection and remediation of frost in an evaporator that is disposed, for example, in a climate control unit of a transport climate control system, a remote climate control unit, etc.

A transport climate control system is generally used to control one or more environmental conditions such as, but not limited to, temperature, humidity, air quality, or combinations thereof, within a climate controlled space of a transport unit. Examples of transport units include, but are not limited to a truck, a container, *i.e.,* a container on a flat car, an intermodal container, a marine container, a rail container, *etc.,* a box car, a semi-tractor, a passenger vehicle, *e.g.*, mass transit bus, or other similar transport unit. A climate controlled transport unit can transport perishable items such as pharmaceuticals, produce, frozen foods, and meat products and/or can be used to provide climate comfort for passengers in a passenger space of a passenger vehicle. The transport climate control system corresponding to the transport unit may include a vapor-compressor type climate controlled system, a thermal accumulator type system, or any other suitable climate controlled system that can use a working fluid, *e.g.*, refrigerant, *etc.*

The transport climate control system can include a climate control unit (CCU) attached to a transport unit and configured to control one or more environmental conditions, *e.g.*, temperature, humidity, air quality, *etc.,* within a climate controlled space of the climate controlled transport unit. The CCU can include, without limitation, a compressor, a condenser, an expansion valve, an evaporator, and one or more fans or blowers to control the heat exchange between the air within the climate controlled space and the ambient air outside of the climate controlled transport unit. In some embodiments, the transport climate control system can be a multi-zone transport climate control system that includes the CCU and one or more remote climate control units each having a remote evaporator. Each of the CCU and the remote climate control units can provide climate control within a different zone of a climate controlled space within a transport unit.

A power system can supply some or all the power to one or more electrical loads of a transport unit including the transport climate control system during transport and/or while stationary at a facility, *e.g.,* a warehouse, a power distribution site, *e.g.,* docking station, storage, charging station, gas station, shipyard, supply yard, rest stop, parking infrastructure, *etc.*

It will be appreciated that the transport climate control system may be required to provide climate control while the transport unit is stationary and/or while the power system is connected to an external power source.

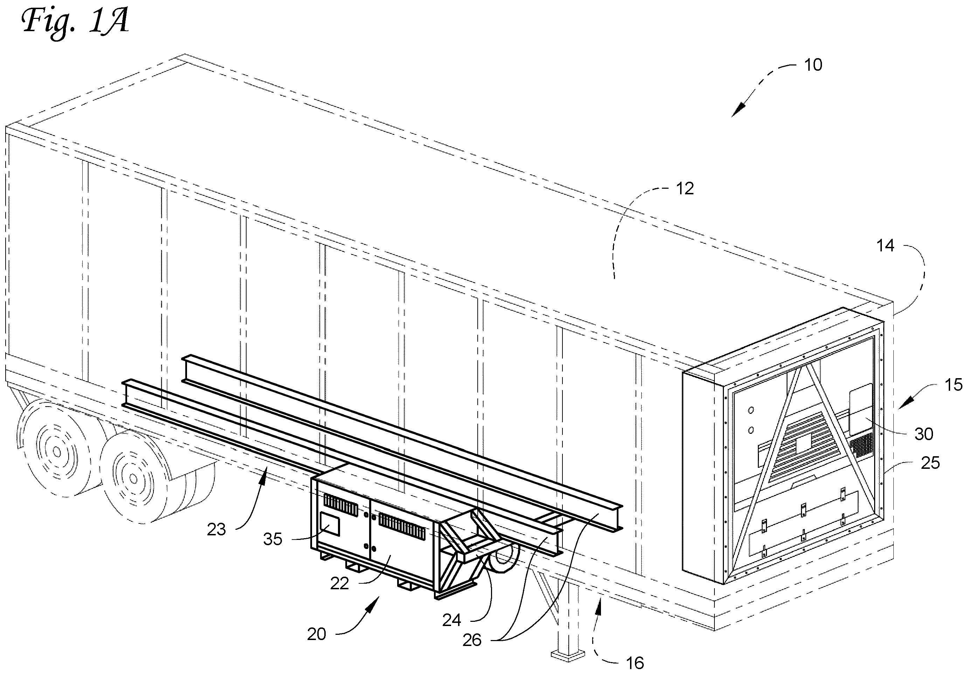

FIGS. 1A - 1E show various transport climate control systems. It will be appreciated that the embodiments described herein are not limited to the examples provided below, but can apply to any type of transport unit *e.g.,* a truck, a container, a box car, a semi-tractor, a passenger vehicle, or other similar transport unit, *etc.*

FIG. 1A illustrates one embodiment of an intermodal container 10 with a transport climate control system 15 and a power system 20, in accordance with at least one embodiment described and recited herein. An intermodal container 10 may be used across different modes of transport including but not limited to, *e.g.,* ship, rail, tractor-trailer, *etc.*

The transport climate control system 15 includes a CCU 25 that provides climate control, *e.g.,* temperature, humidity, air quality, *etc.,* to a climate controlled space 12 of the intermodal container 10. The climate control system 15 also includes a programmable climate controller 30 and one or more sensors and/or probes that are configured to measure one or more parameters of the climate control system 15 *e.g.,* an ambient temperature outside of the intermodal container 10, a space temperature within the climate controlled space 12, an ambient humidity outside of the intermodal container 10, a space humidity within the climate controlled space 12, *etc.*) and communicate parameter data to the climate controller 30.

As further described below, the aforementioned probes may include one or more frost detecting probes, each having one or more electrodes to detect the presence of frost on or in proximity to one or more components of CCU 25, *e.g.*, evaporator; and, as instructed by controller 30, initiate and/or terminate a defrost operation.

The CCU 25 is disposed on a front wall 14 of the intermodal container 10. In other embodiments, CCU 25 can be disposed, for example, on a rooftop or another wall of the intermodal container 10. CCU 25 includes a transport climate control circuit (not shown) that connects, for example, a compressor, a condenser, an evaporator and an expander *e.g.*, expansion valve) to provide conditioned air within the climate controlled space 12.

Climate controller 30 may comprise a single integrated control unit or may comprise a distributed network of climate controller elements (not shown). The number of distributed control elements in a given network may depend upon the particular application of the principles described herein. Regardless of quantity, climate controller 30 may be configured to, *e.g.,* control operation of the climate control system 15 including the transport climate control circuit.

The climate control system 15 is powered by the power system 20. Power system 20 includes a housing 22 attached to a frame 23 by a mounting assembly 24. The mounting assembly 24 can extend between the housing 22 and cross members 26 that are part of the frame 23. The mounting assembly 24 can be made of a high-strength material *e.g.,* steel, *etc.)* to rigidly attach the power system 20 to the intermodal container 10. The power system 20 includes a power system controller 35 that is configured to control operation of the power system 20.

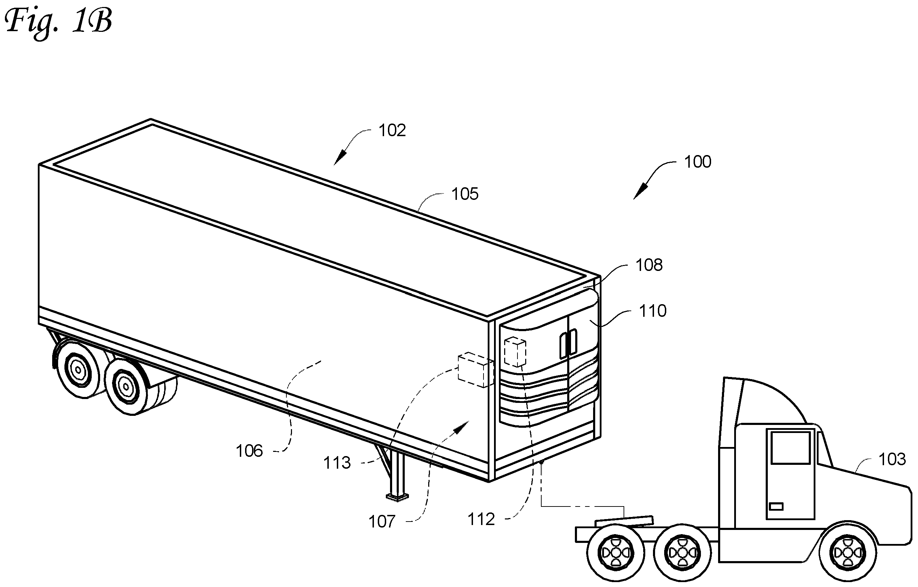

FIG. 1B illustrates one embodiment of a climate controlled transport unit 102 attached to a tractor 103. The climate controlled transport unit 102 includes a climate control system 100 for a transport unit 105. The tractor 103 is attached to and is configured to tow the transport unit 105. The transport unit 105 shown in FIG. 1B is a trailer.

The transport climate control system 100 includes a CCU 110 that provides climate control, *e.g.* temperature, humidity, air quality, *etc.,* within a climate controlled space 106 of the transport unit 105. The climate control system 100 may also include a programmable climate controller 107 and one or more sensors and/or probes that are configured to measure one or more parameters of the climate control system 100 *e.g.,* an ambient temperature outside of the transport unit 105, a space temperature within the climate controlled space 106, an ambient humidity outside of the transport unit 105, a space humidity within the climate controlled space 106, *etc.*) and communicate parameter data to the climate controller 107.

As further described below, the aforementioned probes may include one or more frost detecting probes, each having one or more electrodes to detect the presence of frost on or in proximity to one or more components of CCU 110, *e.g.*, evaporator; and, as instructed by controller 107, initiate and/or terminate a defrost operation.

The CCU 110 may disposed, *e.g.,* on a front wall 108 of the transport unit 105, on a rooftop, or on another wall of the transport unit 105. CCU 110 may include a transport climate control circuit that connects, for example, a compressor, a condenser, an evaporator and an expander *e.g.*, expansion valve) to provide conditioned air within the climate controlled space 106.

The climate controller 107 may comprise a single integrated control unit 112 or may comprise a distributed network of climate controller elements 112, 113. The number of distributed control elements in a given network can depend upon the particular application of the principles described herein. The climate controller 107 is configured to control operation of the climate control system 100 including the transport climate control circuit.

The climate control system 100 is powered by a power system that distributes power to climate control system 100. In some embodiments, the power system can be a generator set attached to the transport unit 105 and electrically connected to one or more components of the climate control system 100 *e.g.,* a compressor, one or more fans and/or blowers, the climate controller 107, one or more sensors, *etc.*).

In some embodiments, the transport climate control system 100 can be a multi-zone transport climate control system that uses the CCU 110 to provide climate control within a first zone of the climate controlled space 106 and one or more remote climate control units with remote evaporators for providing climate control within additional zones of the climate controlled space 106.

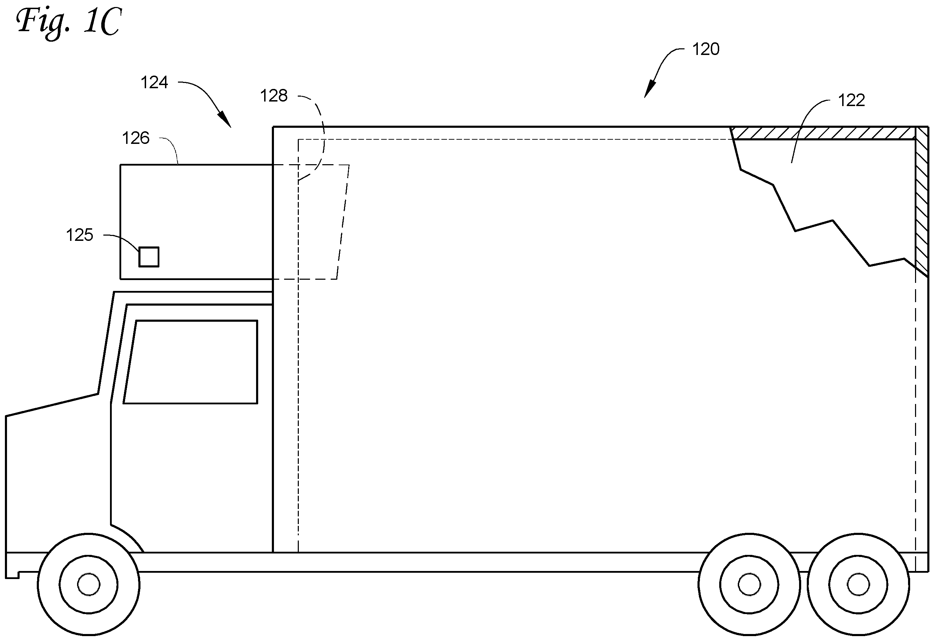

FIG. 1C is a side view of a truck 120 with a transport climate control system 124, according to an embodiment. The truck 120 includes a climate controlled space 122 for carrying cargo. The transport climate control system 124 includes a CCU 126 that is mounted to a front wall 128 of the climate controlled space 122. The CCU 126 can include, among other components, a climate control circuit that connects, for example, a compressor, a condenser, an evaporator, and an expander *e.g.*, expansion valve, to provide climate control within the climate controlled space 122. In an embodiment, the CCU 126 can be a transport refrigeration unit, or the like.

Transport climate control system 124 may also include a programmable climate controller 125 and one or more climate control sensors and/or sensors that are configured to measure one or more parameters of the transport climate control system 124, *e.g.,* an ambient temperature outside of the truck 120, an ambient humidity outside of the truck 120, a compressor suction pressure, a compressor discharge pressure, a supply air temperature of air supplied by the CCU 126 into the climate controlled space 122, a return air temperature of air returned from the climate controlled space 122 back to the CCU 126, a humidity within the climate controlled space 122, *etc.;* and communicate climate control data to the climate controller 125. The one or more climate control sensors can be positioned at various locations outside the truck 120 and/or inside the truck 120 (including within the climate controlled space 122).

As further described below, the aforementioned probes may include one or more frost detecting probes, each having one or more electrodes to detect the presence of frost on or in proximity to one or more components of CCU 126, *e.g.*, evaporator; and, as instructed by controller 125, initiate and/or terminate a defrost operation.

The climate controller 125 is configured to control operation of the transport climate control system 124 including components of the climate control circuit. The climate controller 125 may include a single integrated control unit or may include a distributed network of climate controller elements. The number of distributed control elements in a given network can depend upon the particular application of the principles described herein. The measured parameters obtained by the one or more climate control sensors can be used by the climate controller 125 to control operation of the climate control system 124.

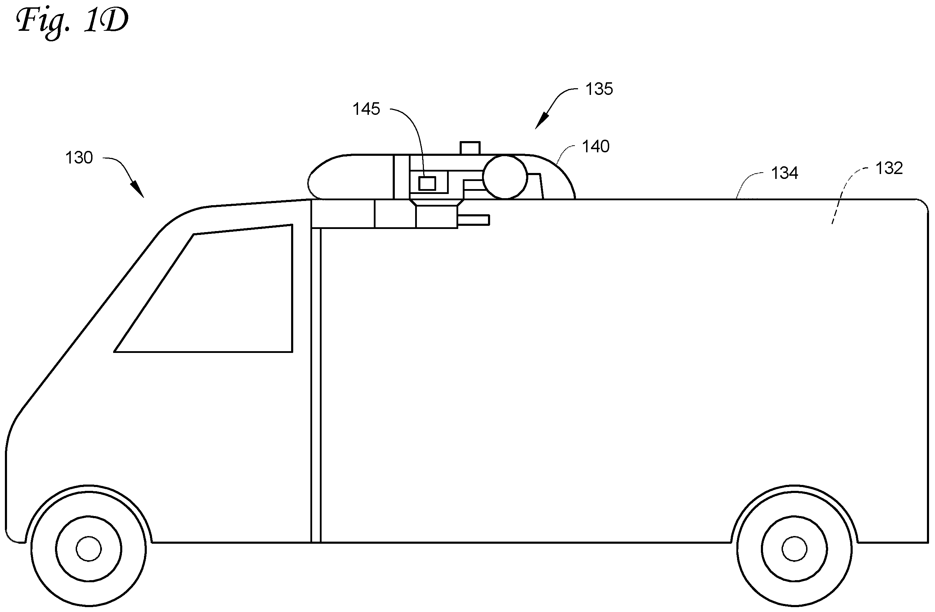

FIG. 1D depicts a side view of a van 130 with a transport climate control system 135 for providing climate control within a climate controlled space 132, in accordance with at least one embodiment. The transport climate control system 135 includes a CCU 140 that is mounted to a rooftop 134 of the van 130. In an embodiment, the CCU 140 can be a transport refrigeration unit, or the like. The climate control system 135 also includes a programmable climate controller 145 and one or more sensors and/or probes that are configured to measure one or more parameters of the climate control system 135 *e.g.,* an ambient temperature outside of the van 130, a space temperature within the climate controlled space 132, an ambient humidity outside of the van 130, a space humidity within the climate controlled space 132, *etc*.) and communicate parameter data to the climate controller 145.

As further described below, the aforementioned probes may include one or more frost detecting probes, each having one or more electrodes to detect the presence of frost on or in proximity to one or more components of CCU 140, *e.g*., evaporator; and, as instructed by controller 145, initiate and/or terminate a defrost operation.

The transport climate control system 135 can include, among other components, a transport climate control circuit that connects, for example, a compressor, a condenser, an evaporator, and an expander, *e.g.*, an expansion valve, to provide climate control within the climate controlled space 132.

The climate controller 145 may comprise a single integrated control unit or may comprise a distributed network of climate controller elements. The climate controller 145 is configured to control operation of the climate control system 135 including the transport climate control circuit.

The climate control system 135 is powered by a power system that can distribute power to the climate control system 135. In some embodiments, the power system can be a generator set attached to the van 130 and electrically connected to one or more components of the climate control system 135 *e.g.,* a compressor, one or more fans and/or blowers, the climate controller 145, one or more sensors, *etc.*

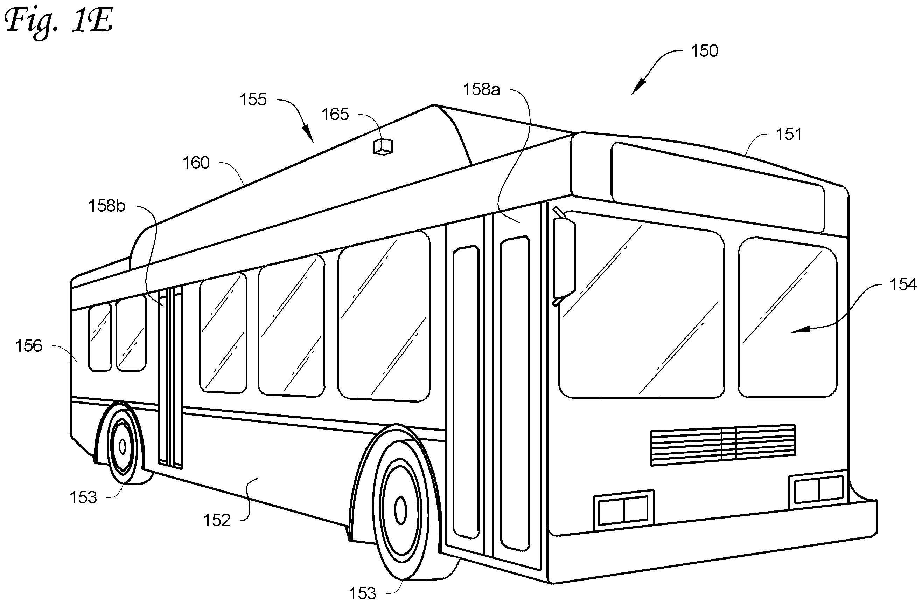

FIG. 1E is a perspective view of a passenger vehicle 150 including a transport climate control system 155, in accordance with at least one embodiment. In the embodiment illustrated in FIG. 1E, the passenger vehicle 150 is a mass-transit bus that can carry passenger(s) (not shown) to one or more destinations. In other embodiments, the passenger vehicle 150 can be a school bus, railway vehicle, subway car, or other commercial vehicle that carries passengers. Hereafter, "vehicle" may represent all such passenger vehicles, and should not be construed to limit the scope of the application solely to mass-transit buses. Transport climate control system 155 can provide climate control within a climate controlled space which is a passenger compartment 154 in this embodiment.

The passenger vehicle 150 includes a frame 152, a passenger compartment 154 supported by the frame 152, wheels 153, and a compartment 156. The frame 152 includes doors 158 that are positioned on a side of the passenger vehicle 150. A first door 158a is located adjacent to a forward end of the passenger vehicle 150, and a second door 158b is positioned on the frame 152 toward a rearward end of the passenger vehicle 150. Each door 158 is movable between an open position and a closed position to selectively allow access to the passenger compartment 154.

The transport climate control system 155 includes a CCU 160 that is mounted to a rooftop 151 of the passenger vehicle 150. In an embodiment, the CCU 160 can be a HVAC unit. The climate control system 155 also includes a programmable climate controller 165 and one or more sensors and/or probes that are configured to measure one or more parameters of the transport climate control system 155, *e.g.,* an ambient temperature outside of the passenger vehicle 150, a space temperature within the passenger compartment 154, an ambient humidity outside of the passenger vehicle 150, a space humidity within the passenger compartment 154, *etc.;* and communicate parameter data to the climate controller 165.

As further described below, the aforementioned probes may include one or more frost detecting probes, each having one or more electrodes to detect the presence of frost on or in proximity to one or more components of CCU 160, *e.g*., evaporator; and, as instructed by controller 165, initiate and/or terminate a defrost operation.

The transport climate control system 155 can include, among other components, a transport climate control circuit that connects, for example, a compressor, a condenser, an evaporator, and an expander, *e.g.*, an expansion valve, to provide climate control within the passenger compartment 154.

The climate controller 165 may comprise a single integrated control unit or may comprise a distributed network of climate controller elements. The climate controller 165 is configured to control operation of the climate control system 155 including the transport climate control circuit.

The climate control system 135 is powered by a power system that may distribute power to the climate control system 135. In some embodiments, the power system may be a generator set attached to the passenger vehicle 150 and electrically connected to one or more components of the climate control system 155, *e.g.,* a compressor, one or more fans and/or blowers, the climate controller 165, one or more sensors, *etc.*

The embodiments for frost detection and defrost control described and recited herein include a probe that may have one or more electrodes to detect the presence, and quantity, of frost on or in proximity to components of any one or more of CCU 25, 110, 126, 140, and 160, described above. Non-limiting examples of such climate control system components may include, but not be limited to, evaporator coils for an evaporator unit. While the embodiments described and recited herein pertain primarily to evaporator coils, the embodiments and principles thereof may clearly be directed and/or applied to other components on which water, in liquid or gaseous form, is typically expected to not freeze and, at which, water in solid form is detrimental to efficient performance and maintenance of such component.

For an evaporator coil having multiple electrical heater bands disposed thereon, the embodiments described and recited herein are configured to provide information regarding quantity and patterns of frost buildup.

As an extension of such information, with regard to the multi-zone transport environment, the embodiments described and recited herein may be disposed and controlled in such a manner to affect sequential defrosting that implements efficient power consumption, which is an improvement over presently known practices.

Accordingly, the embodiments described and recited herein pertaining to frost detection and defrost control provide detection of the formation of frost and/or ice; the quantity, *i.e*., thickness, thereof; and the controlling of one or more defrost cycles that result in the dissipation of the frost or ice. The defrost control further implements price initiation of defrosting that efficiently and optimally utilizes power afforded to the respective CCU by avoiding false detection of frost or ice and also defrosting based on the presence of frost or ice rather than on a time-basis.

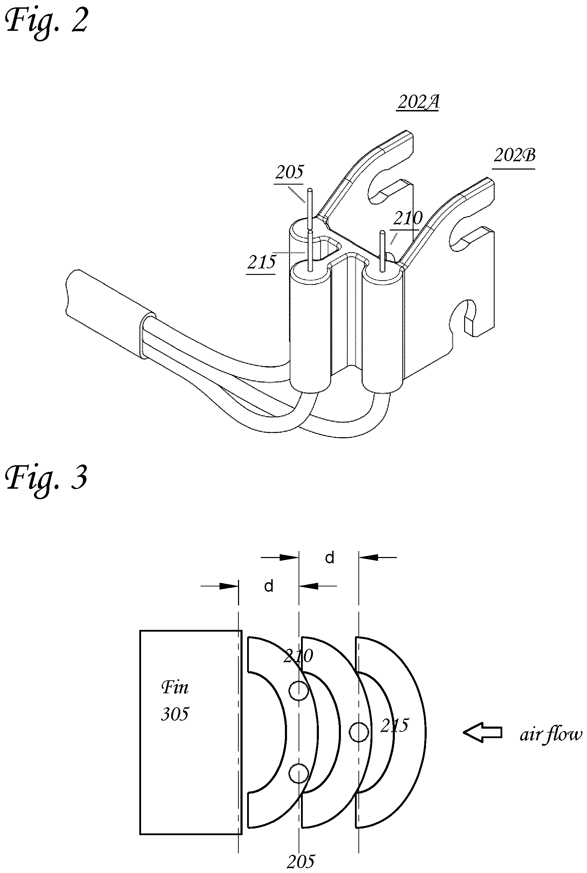

Portions of the present disclosure, in its entirety but particularly with regard to FIGS. 2-11B and following, may be described herein in terms of functional block components and various processing steps. It should be appreciated that such functional blocks may be realized by any number of hardware and/or software components configured to perform the specified functions.

FIG. 2 shows a probe 200 for frost detection and defrost control, applicable to at least any one or more of CCU 25, 110, 126, 140, and 160, described above, in accordance with at least one embodiment described and recited herein. Further, the embodiments described and recited herein may also be applicable to multi-zone transports environment, *i.e.,* a transport environment having multiple evaporators controlled by a common controller.

Probe 200 includes electrodes 205, 210, and 215, which are calibrated to be a uniform distance from each other. Each of probes 205, 210, and 215 is electrically connected to a controller, *e.g.*, controllers 30, 107, 125, 145, and 165, described above. Alternative embodiments of probe 200, which will be referenced below, include a single electrode.

Thus, non-limiting embodiments described and recited herein may refer to a system, or components thereof, to detect frost in an evaporator component, *e.g*., evaporator coil. Examples of the system may include a controller and a probe. The probe itself may include one or more electrodes, and may be attached to a component of the evaporator coil, and also be configured to transmit detection of one or more environmental conditions in proximity to the component of the evaporator coil to the controller. Upon receipt and processing of the environmental condition(s), the controller may initiate and terminate a defrost operation.

By some embodiments, the probe may be configured to detect frost on the component of the evaporator coil and transmit detection of one or more environmental conditions in proximity to the component of the evaporator coil to the controller by transmitting data indicating the detection of frost on the component of the evaporator coil to the controller. The controller is configured to initiate the defrost operation upon receiving the data indicating the detection of a threshold amount of frost on the component of the evaporator coil. The probe may be configured to further detect reduction of frost on the component of the evaporator coil and transmit environmental condition(s) in proximity to the component of the evaporator coil to the controller by transmitting data indicating the reduction of frost on the component of the evaporator coil. The controller is configured to further terminate the defrost operation upon receiving the data indicating the detection of a threshold reduction of frost on the component of the evaporator coil.

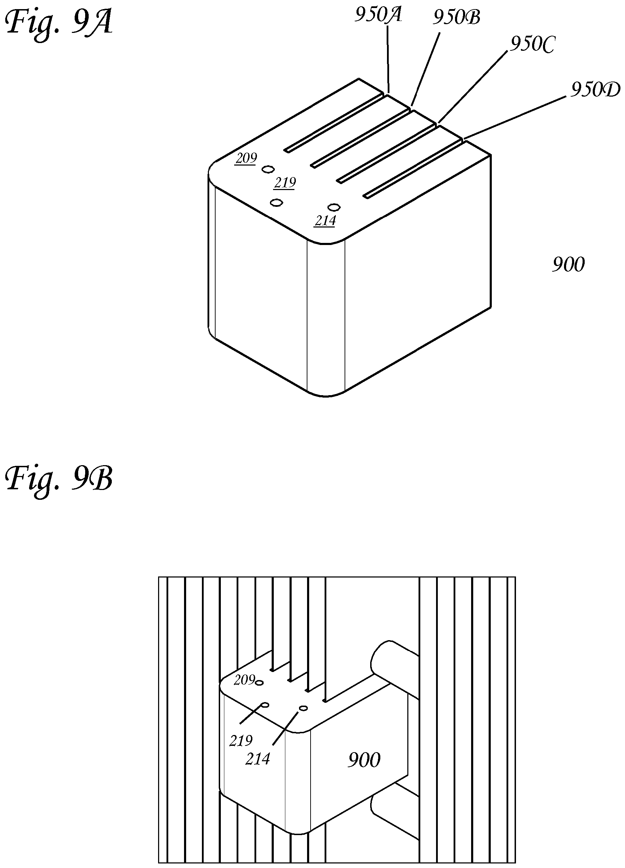

In accordance with at least one embodiment, probe 200 may be disposed on or within a threshold proximity to an evaporator coil as latches 202A and 202B connect to or are otherwise mounted on to a portion of a pipe corresponding to the evaporator. Alternative embodiments of probe 200, such as those shown in FIGS. 9A and 9B, may be configured to be wedged between two or more fins of the evaporator, as discussed further below.

It is understood that the performance of an evaporator coil can deteriorate as frost accumulates internally between fins thereof. Based on testing, but not to be interpreted as a limiting value, the threshold proximity to an evaporator coil as referenced herein is in the range of 4mm to 5mm.

In such non-limiting example embodiments, probe 200 is disposed on or within a threshold proximity to an evaporator coil such that any occurrence of frost or ice in that proximity to the evaporator coil is formed over electrodes 205, 210, and 215. Accordingly, as moisture or liquid water freezes on the respective probes, electrical resistance between the electrodes increases due to the crystallization of water molecules. That is, as temperature measurements from the respective electrodes are cyclically, periodically, or otherwise continuously transmitted to the corresponding controller, the controller cyclically, periodically, or otherwise continuously determines the resistance between the electrodes, *i.e.,* between electrodes 205 and 210, and between electrode 210 each of electrode 205 and electrode 210, respectively.

The resistance values between the permutations of electrode parings of at least a threshold resistance value may be indicative of frost and/or ice. The controller is configured to, based on the determined resistance values indicative of a formation of at least frost, initiate a defrost operation. Further, because flaked ice, hard ice, clear ice, *etc.,* have different resistance values, the resistance values may enable a defrost operation or protocol to be tailored by varying a temperature and/or amount of time at which heat is directed to or otherwise applied to the component of the evaporator on which frost or ice has accumulated. Otherwise, with no frost or ice between electrodes or between electrodes and some other component of the evaporator, *i.e.,* with no material, *e.g.*, frost or ice, therebetween, the resistance values are those of an open circuit, as either an infinite resistance (∞Ω-air resistance) or an open loop if the measured resistance exceeds the controller's measurement threshold.

Further still, in accordance with at least one example embodiment, based on a knowledge of spacing between each of the respective electrodes 205, 210, and 215 and the corresponding evaporator coil, the thickness of the frost on the evaporator coil may be discerned. The defrost operation may also factor the thickness into account when implementing the defrost operation or protocol.

The non-limiting example embodiment of probe 200 include electrodes 205 and 210, which are equidistant to the component, *e.g.*, evaporator coil, of a corresponding evaporator, to provide data to the controller that is used to determine the buildup of frost and/or ice on or in proximity to the component. Data from electrodes 205 and 210 are further utilized to detect the state of the frost buildup.

The non-limiting example embodiment of probe 200 also includes electrode 215, disposed further from the component than electrodes 205 and 210, to provide data to the controller that is used to determine the thickness and/or growth rate of frost or ice on or in proximity to the component.

Implementation of probe 200, including electrodes 205, 210, and 215, was validated by experimentation that included placing probe 200 in a container of water. In one non-limiting experiment, the container was placed in a freezer, an ohmmeter determined the resistance of the water to be 0.5 to 4MQ between the pairing permutations of electrodes 205, 210, and 215, which are calibrated to be a uniform distance from each other. Upon a determination that the water was frozen, the ohmmeter determined the resistance of the frozen water to be 130 to 200M'Ω.

Thus, it was determined that any foreign material that bridges a gap between any of electrodes 205, 210, and 215 may be detected in accordance with a resistance value. Further, resistance values of water, whether in liquid form, frost, or ice, is repetitive and consistent. Therefore, determinations of the buildup of frost or ice are proven reliable. Further, condensate water, distilled water, and tap water provided similar resistance values, thus negating a possible deviant variable. The embodiments described and recited herein are predicated on resistance value changes between water in a liquid state and water in a solid state, which is proven to be on the order of approximately 3500% or, for example, by at least a factor of 10X or more.

When applied to a different non-limiting testing environment, *e.g*., refrigerator, resistance between permutations of electrodes 205, 210, and 215 is determined to be approximately 3.3 MQ upon detection of condensate on the evaporator coil. Resistance between permutations of the electrodes is determined to be approximately 47 M'Ω upon initial detection of frost on the evaporator coil, with a final determination of 190 M'Ω.

Alternative embodiments of probe 200 may include a single electrode, *e.g.,* 215. In such an embodiment, resistance may be measured between electrode 215 and a proximate component of a corresponding evaporator coil, for example, a fin thereof. That is, a single electrode 215 may utilize the evaporator coil itself as a ground connection, thus reducing a number of wires needed to provide a common ground. Further, by reducing a number of wires attached to the electrode, the electrode may be placed deeper between the fins of the evaporator coil.

FIG. 3 shows a depiction of environment for frost detection and defrost control, in accordance with at least one embodiment described and recited herein.

As an example of implementation of probe 200, including electrodes 205, 210, and 215, in a testing environment, based on a knowledge spacing between each of respective electrodes 205, 210, and 215 and fin 305 of the corresponding evaporator coil, the thickness of the frost on the evaporator coil may be discerned.

For example, the distance between a front each of both electrodes 205 and 210 to fin 305 of an evaporator coil is predetermined to be the threshold distance *d, e.g.,* 5mm; and the distance from a distal edge of both electrodes 205 and 210 to a front edge of electrode 215 is predetermined to also be *d, e.g.,* 5mm. Thus, as the controller determines the resistance between electrodes 205 and 210 to be at least the threshold value of, *e.g.,* 130 to 200M'Ω, it may be determined that the thickness of the frost or ice buildup is approximately *d, e.g.,* 5mm. The frost buildup growth, according to non-limiting experimentation, may take up to 30 minutes. Further buildup growth of the frost, according to the non-limiting experimentation, to be *2d* from fin 305 to electrode 215, *i.e., d* from the distal edge of electrodes 205 and 210 to a frontal edge of electrode 215, may take approximately 30 more minutes, with *d* being as little as 1mm. Thus, the controller may implement a defrost operation in accordance with knowledge of the frost buildup.

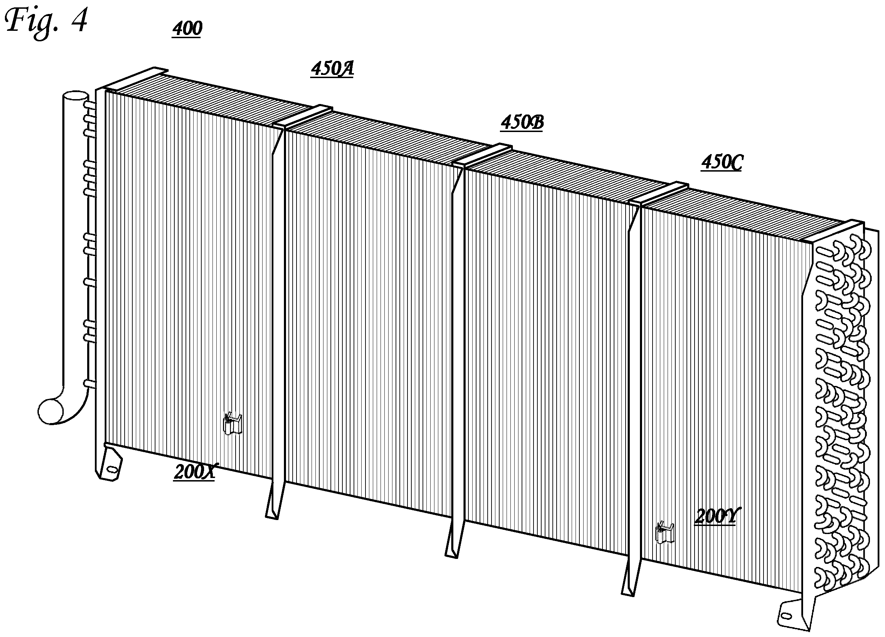

FIG. 4 shows an example of evaporator coil 400 with multiple probes, *e.g.,* 200X, 200Y, disposed thereon, in accordance with at least one non-limiting example embodiment described and recited herein.

Evaporator coil 400 may have multiple electrical heater bands 450A, 450B, and 450C disposed thereon. The embodiments described, recited, and contemplated herein are by no means limited to, or even require, three heater bands. That is, the example depiction is for descriptive purposes only. Further, unless context otherwise requires greater specificity, reference herein will be made to heater rod 450 with the understanding that it applies to any or all of heater bands 450A, 450B, and/or 450C. Likewise, the example embodiments are not limited in any manner to probes 200X and 200Y. Thus, for reasons just stated, reference may be made simply to probe 200.

In the embodiment of FIG. 4, probes 200 may be disposed on or within the threshold value to components of an evaporator coil, *e.g.,* one or more fins, to provide accurate data to a controller, which may then implement precise initiation of a defrost operation. As stated previously, it is understood that the performance of an evaporator coil begins to deteriorate as frost accumulates internally between fins thereof. The threshold proximity to an evaporator coil as referenced herein can be in the range of 4mm to 5mm. Thus, such placement of one or more probes 200 results in nominal risk of a false detection of frost in such proximity of the component and efficient utilization of power apportioned to the component. That is, the embodiments described and recited herein result in defrosting being implemented based on need, as opposed to being implemented on a timer-based manner.

As examples of such placement, one or more of probes 200 may be placed at locations on or proximate to evaporator coil 400 at which water or condensate is not expected to freeze or refreeze under regular operating conditions. Alternatively, or in addition, one or more of probes 200 may be placed at locations on or proximate to evaporator coil 400 at which any frost or ice that develops is expected to melt and drain away completely upon implementation of a defrost operation.

Furthermore, in accordance with the non-limiting example of FIG. 4, it may occur that unequal amounts or depths of frost or ice may build up in at respective probes 200X and 200Y. Therefore, because each probe on a common evaporator coil is able to transmit information to the controller indicative of the presence or absence of frost or ice in that proximity, the defrost operation for the evaporator coil may be customized or tailored accordingly. That is, the temperature of heat, and duration thereof, applied to heat band 450A by the corresponding controller may be less or more than the temperature of heat, and duration thereof, applied to heat band 450C, by the same controller, if the amount or depth of frost or ice built up in proximity to respective probes 200X and 200Y differs.

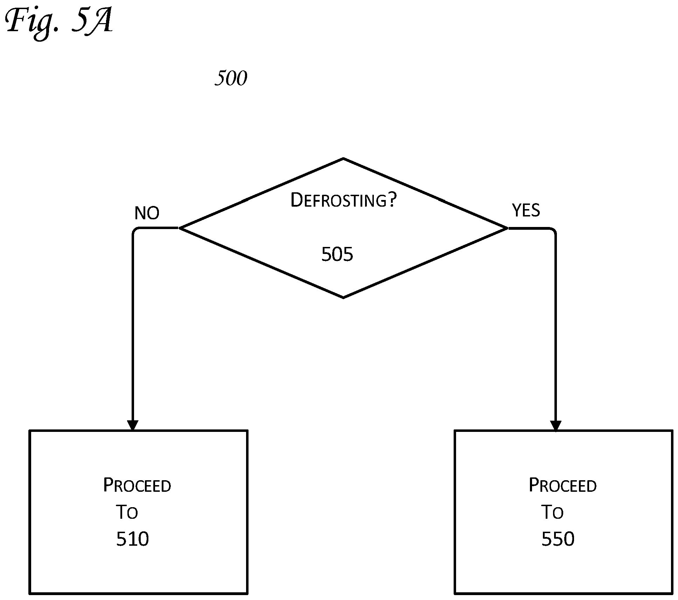

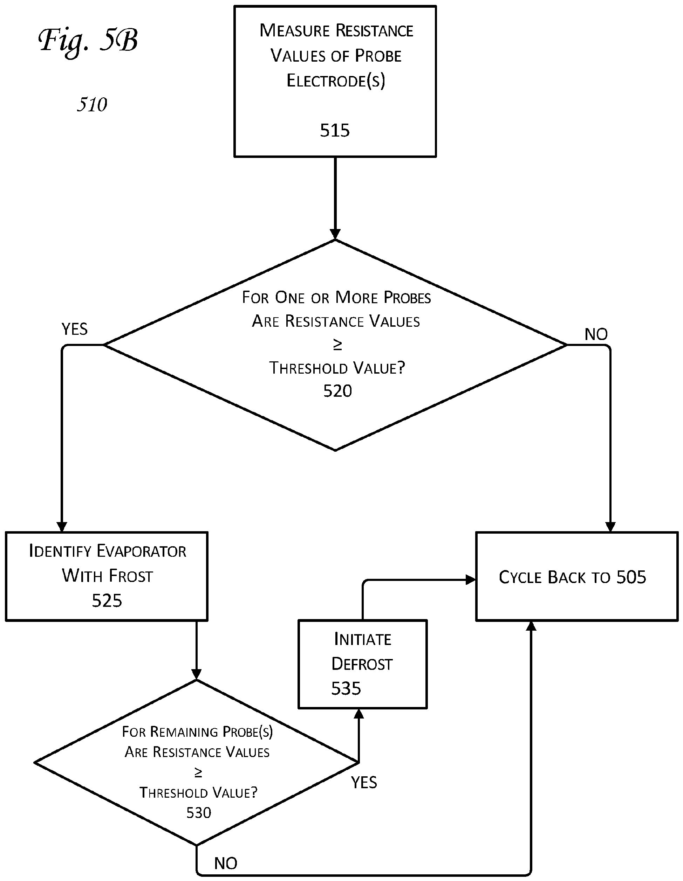

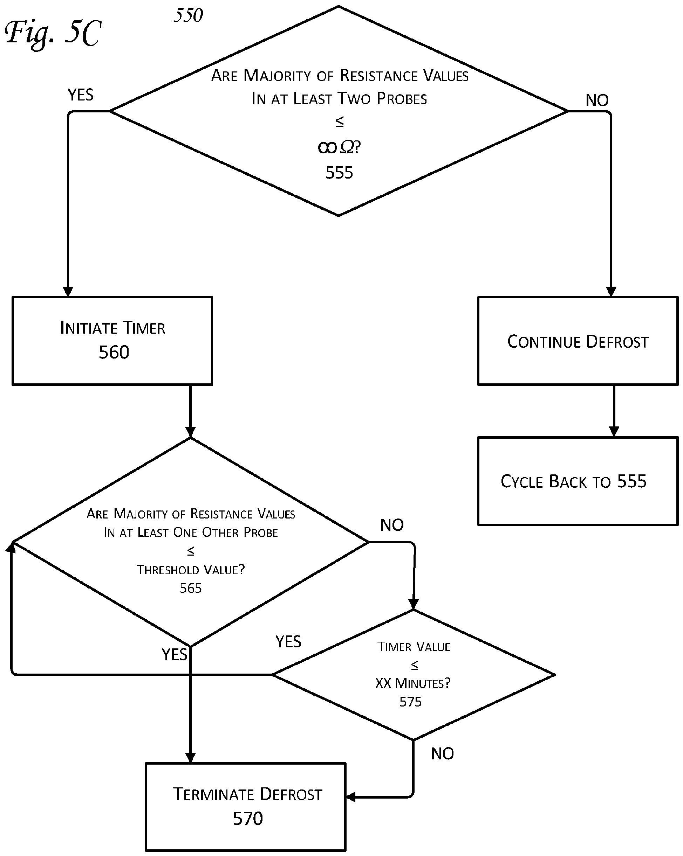

FIGS. 5A, 5B, and 5C combine to show a non-limiting example processing flow of frost detection and defrost controlling, in accordance with at least one embodiment described and recited herein. Reference to the combined processing flow may be referred to as processing flow 500 in FIG. 5, unless context otherwise requires. Further, although the processing flow of FIG. 5 makes reference to the non-limiting example embodiment of FIG. 4, the embodiments of processing flow or that of the one or more probes relative to an evaporator are in no way limited to what is depicted and described herein. For example, any one or more of probes 200 may have one or more electrodes per probe; similarly, a common evaporator component, *e.g*., evaporator coil, is not limited in the number of probes 200 that may be attached or otherwise in operational proximity thereto.

For descriptive purposes only, FIG. 5 will be described with reference to three probes, 200X, 200Y, and 200Z disposed on or in close proximity to evaporator coil 400 at areas or zones of evaporator cool 400 of varying frost formation rates or probabilities. Further, each of probes 200 has a corresponding heater bar 450 in close proximity thereto, with each heater bar being controlled independently by the corresponding controller.

As depicted, processing flow 500 of FIGS. 5A- 5C includes sub-processes executed primarily by any one or more of controllers 30, 107, 125, 145, and 165 described above regarding the example embodiments of FIGS. 1A - 1E. However, processing flow 500 is not limited to such components and processes, as obvious modifications may be made by re-ordering two or more of the sub-processes described here, eliminating at least one of the sub-processes in the following description, *etc.*

Processing starts at 505, at which it must first be determined whether the respective controller is currently implementing a defrost operation using any one of the one or more of heater bars 450. If no defrost operation is currently implemented, processing proceeds to sub-processing flow 510 shown in FIG. 5B; but if a defrost operation is currently implemented, processing proceeds to sub-processing flow 550 shown in FIG. 5C.

At 515, a resistance of each of electrodes 205, 210, and 215 is measured and corresponding resistance data is transmitted to a common corresponding controller. Such data transmission can be executed cyclically, periodically, or otherwise continuously. Accordingly, the controller is able to determine a resistance between the paired-permutations of electrodes, *e.g*., between 205 and 210, between 205 and 215, and between 210 and 215.

It is noted previously that some alternative embodiments include only electrode 215. In such case, resistance for a probe having only electrode 215 disposed within a threshold proximity, *e.g.,* 5mm, of, *e.g.,* a fin of evaporator coil 400 may be determinative of the presence or absence of frost or ice at the corresponding fin.

As set forth previously, with no frost or ice between electrodes or between electrodes and some other component of the evaporator, *i.e.,* with no material, *e.g.,* frost or ice, therebetween, the resistance values can be those of an open circuit, as either an infinite resistance (∞Ω-air resistance) or an open loop if the measured resistance exceeds the controller's measurement threshold.

Regardless of the embodiment of probe 200, processing proceeds to 520.

At 520, the controller determines whether any of the paired-permutations of electrodes, *e.g*., between 205 and 210, between 205 and 215, and between 210 and 215, for each respective electrode 200 is equal to or greater than a threshold resistance value, *e.g*., between 130 to 200M'Ω, which is indicative of the presence of frost or ice proximate to the respective probe 200.

Based on a positive determination at 520, processing proceeds to 525; whereas, based on a negative determination at 520, processing cycles back to 505.

At 525, the controller identifies one of the probes 200 having a positive determination at 520 as having frost or ice in proximity thereto. Processing then proceeds to 530.

At 530, a similar determination as at 520 may be made for one or more of probes 200 corresponding to evaporator coil 400. Thus, the determination at 530 may be combined with that of 520. Regardless, it is to be understood that a determination of the presence or absence of frost or ice is made individually for each of probes 200, as the respective probes 200 may be placed on or proximate to evaporator coil 400 in areas in which a probability or likelihood of frost or ice buildup varies.

Further, at both of 520 and 530, a determination of the presence of frost or ice by a respective probe 200 may further include a determination of the thickness and/or growth rate of the frost or ice by electrode 215, as described previously.

That is, stated once again, the embodiments described and recited herein result in defrosting being implemented based on need, as opposed to being implemented on a timer-based manner. Accordingly, for those areas of evaporator coil 400 having probes 200 that indicate the presence of frost or ice on or in proximity, processing proceeds to 535; whereas, for those areas of evaporator coil 400 having probes 200 that indicate the absence of frost or ice on or in proximity, processing cycles or reverts back to 505.

At 535, the controller is configured to initiate a defrost operation for a portion of an evaporator coil (or for a particular evaporator coil) for which the proximate presence of frost or ice has been determined by instructing heat to be applied to the closest one of heating bands 450. Further, the controller may even control the temperature of the heat applied to the respective heating band 450 dependent upon the determined thickness and/or growth rate of the frost or ice proximate to the respective probe 200, as determined based on data transmitted from the corresponding probe 215.

It will be appreciated that 535 may further be understood to implement a maintenance or continuation of the defrost operation so long as frost or ice is determined to be present on or proximate to a respective probe 200, as data transmission from the respective electrodes corresponding to the probes 200 is transmitted to the corresponding controller cyclically, periodically, or otherwise continuously, as a defrost operation is implemented.

Upon determination that an area of evaporator coil 400 having a respective probe 200 that indicates the absence of frost or ice on or in proximity, processing cycles or revert backs to 505.

In sub-process 500, upon determining that the controller is implementing a defrost operation for a heating band 450 corresponding to a probe 200, at 555, the controller receiving data from electrodes corresponding to a respective one of probes 200 determines whether there is frost or ice present at least in proximity, since an infinite resistance or open loop can be indicative of the absence of matter proximate to the respective probe.

Upon a positive determination at 555, processing may proceed to 560, though processing at 560 may be considered to be optional. In such case, processing proceeds to 565. Upon a negative determination at 555, the defrost operation continues and processing cyclically reverts back to 555.

At 560, the controller initiates a timer for the cycles or periods for determining whether there is frost or ice present at least in proximity to remaining probes 200, since an infinite resistance or open loop is indicative of the absence of matter proximate to the respective probe.

At 565, the controller makes the aforementioned determination for the remaining probes 200.

At 570, upon a positive determination at 565, the defrost operation is terminated, and processing cycle backs or reverts to 505.

At 575, upon a negative determination at 565, the controller determines whether the timer value is less than or greater than a threshold value. Upon a positive determination, processing cycles back to 565; whereas upon a negative determination, processing proceeds to 570. The threshold value refers to an amount of time needed by the system's heating capacity to melt frost completely from the evaporator, which can depend on, for example, a measured or detected mass of frost formed on the evaporator coil, the total frontal surface area on the evaporator coil and the ice probe position, etc. The threshold time may be dependent upon various factors including, but not limited to, a size of the evaporator, a number of electric heater roads, *etc.* As a non-limiting example, 30 to 45 minutes may be considered as a maximum value for a defrost time threshold. That is, as stated above with regard to the non-limiting example embodiment of FIG. 3, a defrost operation may be implemented in accordance with a knowledge of the frost buildup. For example, the distance between a front each of both electrodes 205 and 210 to fin 305 of an evaporator coil may be predetermined to be *d, e.g.,* 5mm; and the distance from a distal edge of both electrodes 205 and 210 to a front edge of electrode 215 may also be predetermined to also be *d*. Thus, as the controller determines the resistance between electrodes 205 and 210 to be at least the threshold value of, *e.g.,* 130 to 200M'Ω, it may be determined that the thickness of the frost or ice buildup is approximately *d, e.g.,* 5mm; and, just as the frost buildup growth, according to non-limiting experimentation, may take up to 30 minutes, it may be determined that such frost may take 30 to 45 minutes to melt or defrost. In sum, the closer a probe is to a surface of an evaporator coil, the thinner or smaller a detected layer of frost or ice will be by the probe; and, therefore, the less time is needed to defrost or melt the detected layer. Thus, the closer the ice probe position to the evaporator coil, the less time needed to melt the frost completely.

As an extension of the processing implemented in accordance with FIGS. 5A - 5C , with regard to the multi-zone transport environment, the embodiments described and recited herein may be disposed and controlled in such a manner to affect sequential defrosting that implements efficient power consumption, which is an improvement over presently known practices.

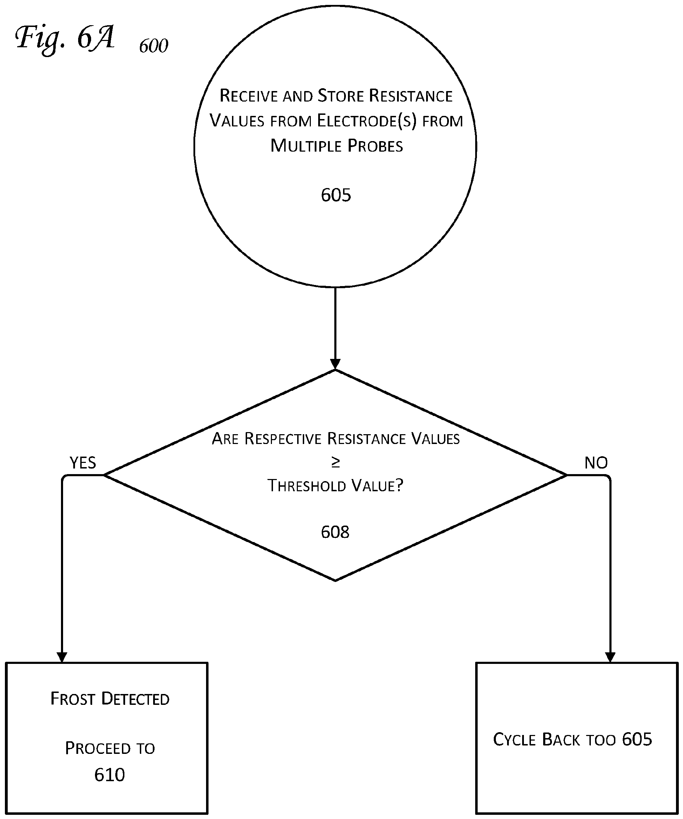

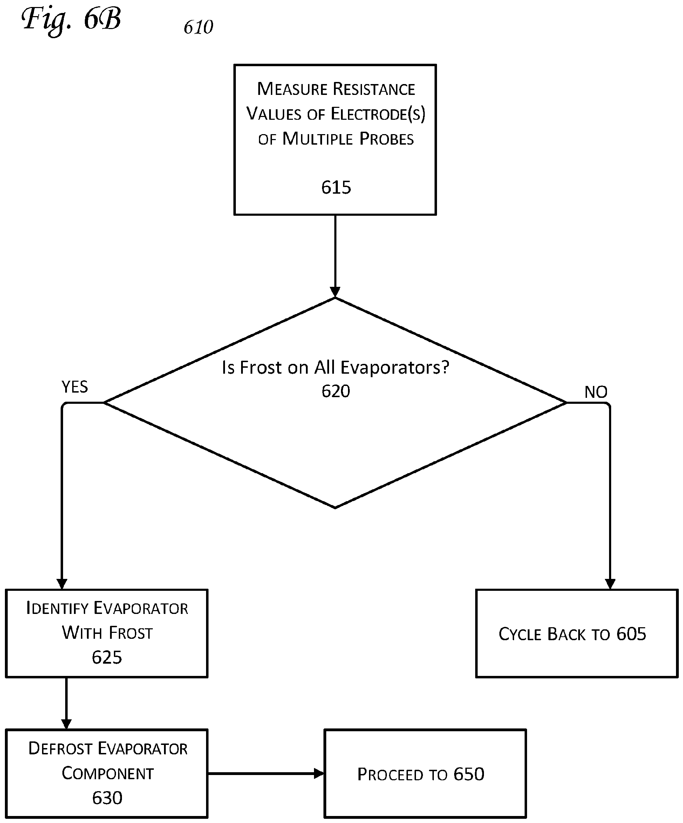

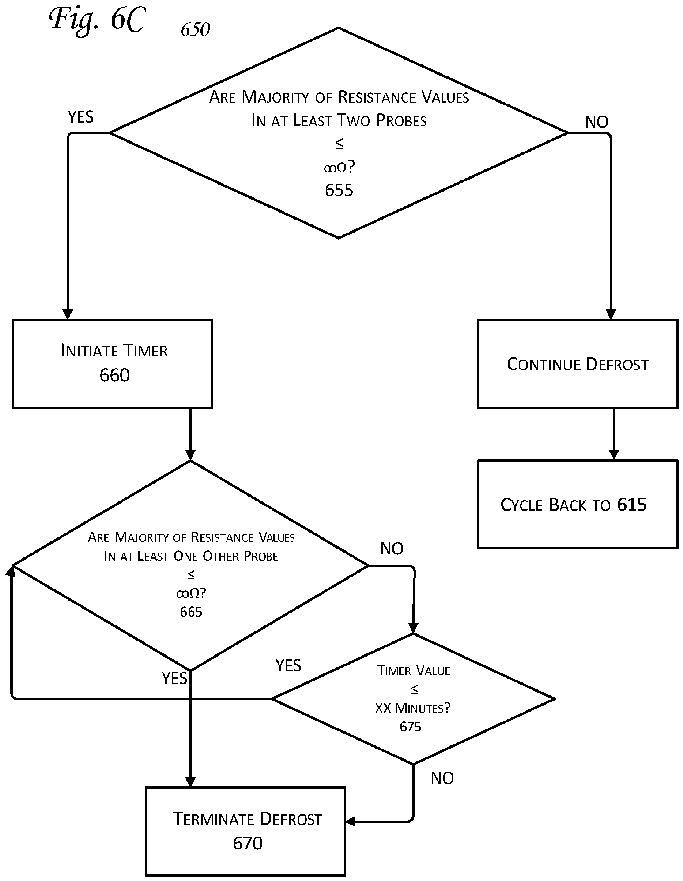

FIGS. 6A, 6B, and 6C combine to show a non-limiting example processing flow of frost detection and defrost controlling, in accordance with at least one embodiment described and recited herein. Reference to the combined processing flow may be referred to as processing flow 600 in FIG. 6, unless context otherwise requires. Further, although the processing flow of FIG. 6 makes reference to the non-limiting example embodiment of FIG. 4, the embodiments of processing flow or that of the one or more probes relative to an evaporator are in no way limited to what is depicted and described herein. For example, any one or more of probes 200 may have one or more electrodes per probe; similarly, a common evaporator component, *e.g.*, evaporator coil, is not limited in the number of probes 200 that may be attached or otherwise in operational proximity thereto.

For descriptive purposes only, FIG. 6 will be described with reference to three probes, 200X, 200Y, and 200Z disposed on or in close proximity to evaporator coil 400 at areas or zones of evaporator cool 400 of varying frost formation rates or probabilities. Further, each of probes 200 has a corresponding heater bar 450 in close proximity thereto, with each heater bar being controlled independently by the corresponding controller. Further still, FIG. 6 refers to a multi-zone transport environment, *i.e.,* a transport environment having multiple evaporators controlled by a common controller, by which a sequential defrost operation may be implemented, thus resulting in efficient power consumption. Thus, as an extension of FIG. 4, FIG. 6 is described with regard to a non-limiting example of three embodiments of evaporator coil 400, one of which may be referenced as corresponding to a host evaporator and two of which may be referenced as corresponding to a first and a second remote evaporator.

As depicted, processing flow 600 of FIGS. 6A - 6C includes sub-processes executed primarily by any one or more of controllers 30, 107, 125, 145, and 165 described above regarding the example embodiments of FIGS. 1A - 1E. However, processing flow 500 is not limited to such components and processes, as obvious modifications may be made by re-ordering two or more of the sub-processes described here, eliminating at least one of the sub-processes in the following description, *etc.*

Processing starts at 605, at which probes on or proximate to respective evaporator coils 400 in each of the host evaporator and remote evaporators transmit data from the electrode(s) therein to the common controller. Processing then proceeds to 608.

At 608, the common controller determines whether frost or ice is present on or in proximity to respective ones of probes 200 on one or more of the evaporator coils 400 on the respective evaporators, *i.e.,* the measured resistance value between 205 and 210, between 205 and 215, and between 210 and 215, for each respective electrode 200 is equal to or greater than a threshold resistance value, *e.g.*, between 130 to 200M'Ω, which is indicative of the presence of frost or ice proximate to the respective probe 200.

If frost or ice is detected at any of probes 200, processing proceeds to sub-process 610 described with regard to FIG. 6B; but, if no frost or ice is determined to be on or proximate to any of probes 200, processing cycle backs or reverts to 605.

At 615, in sub-process 610, resistance values corresponding to electrodes in probes 200 for each of the evaporators are transmitted to the common controller. Processing then proceeds to 620.

At 620, the controller determines whether there is frost on the host evaporator, as well as the remote evaporators. Upon a negative determination, processing reverts back to 605; whereas upon a positive determination, processing proceeds to 625.

At 625, the controller identifies each probe, corresponding to each evaporator coil, on which, or in proximity, frost or ice is determined to have built up. Processing then proceeds to 630.

At 630, the controller initiates a defrost operation for a portion of an evaporator coil (or for a particular evaporator coil) for which the proximate presence of frost or ice has been determined by instructing heat to be applied to the closest one of heating bands 450. Further, the controller may even control the temperature of the heat applied to the respective heating band 450 dependent upon the determined thickness and/or growth rate of the frost or ice proximate to the respective probe 200, as determined based on data transmitted from the corresponding probe 215.

It will be appreciated that 630 may further be understood to implement a maintenance or continuation of the defrost operation so long as frost or ice is determined to be present on or proximate to a respective probe 200, as data transmission from the respective electrodes corresponding to the probes 200 is transmitted to the corresponding controller cyclically, periodically, or otherwise continuously, as a defrost operation is implemented. Processing then proceeds to 655 in sub-process 650.

At 655, even as a defrost operation is implemented as at 630, the controller continues to receive data from electrodes corresponding to a respective one of probes 200 and thus continues to determine whether there is frost or ice present at least in proximity to the probes, since an infinite resistance or open loop is indicative of the absence of matter proximate to the respective probe. Upon a negative determination, 655 repeats.

At 660, upon a positive determination at 655, the controller initiates a timer for the cycles or periods for determining whether there is frost or ice present at least in proximity to remaining probes 200, since an infinite resistance or open loop can be indicative of the absence of matter proximate to the respective probe.

At 665, the controller continues to receive data from electrodes corresponding to remaining probes 200 to determine whether there is frost or ice present at least in proximity to the remaining probes, since an infinite resistance or open loop can be indicative of the absence of matter proximate to the respective probe.

At 670, upon a positive determination at 665, the defrost operation is terminated, and processing cycles back or reverts to 605.

At 675, upon a negative determination at 565, the controller determines whether the timer value is less than or greater than a threshold value. Upon a positive determination, processing cycles back to 565; whereas upon a negative determination, processing proceeds to 570.

Accordingly, the embodiments described and recited herein pertaining to frost detection and defrost control provide detection of the formation of frost and/or ice; the quantity, *i.e*., thickness, thereof; and the controlling of one or more defrost cycles that result in the dissipation of the frost or ice in a multi-zone transport environment. The defrost control further implements precise initiation of defrosting that efficiently and optimally utilizes power afforded to the respective CCU by avoiding false detection of frost or ice and also defrosting based on the presence of frost or ice rather than on a time-basis.

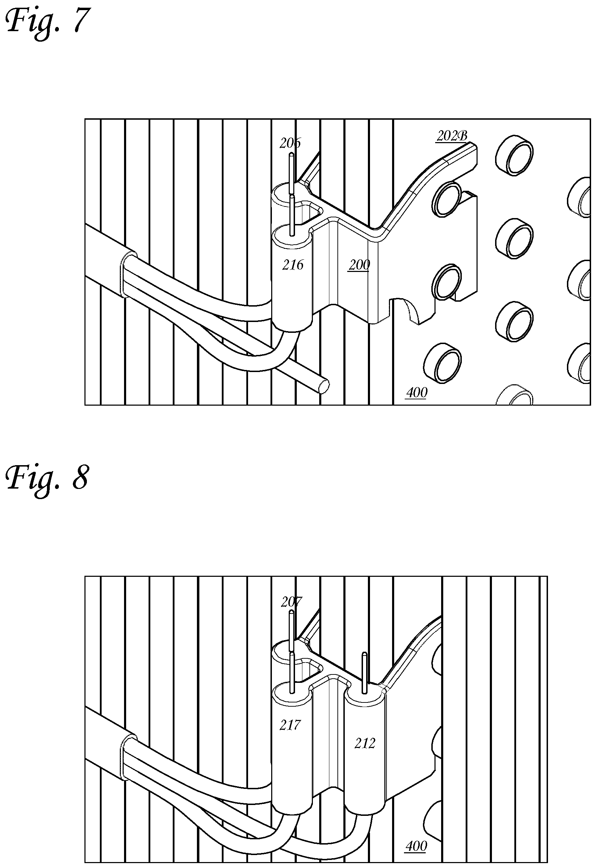

FIG. 7 shows a non-limiting example of a probe attached to an evaporator coil, in accordance with at least one embodiment described and recited herein.

In FIG. 7, latches 202A (not shown) and 202B of a probe 200 are configured to latch onto a consecutive tubes of evaporator coil 400. In the non-limiting example embodiment of FIG. 7, at least one of the latches 202A and 202B is disposed between consecutive fins of the evaporator coil. Probe 200 is shown to have electrodes 206 and 216.

FIG. 8 shows a non-limiting example of a probe 200 attached to an evaporator coil 400, in accordance with at least one embodiment described and recited herein.

The non-limiting example embodiment of FIG. 8 is attached to the evaporator coil 400 similarly as in FIG. 7, though the probe 200 is shown to have three electrodes 207, 212, and 217.

FIG. 9A shows a non-limiting example of a probe 900, in accordance with at least one alternative embodiment described and recited herein.

The probe 900 does not include latches, but rather has a non-limited number of slits 950A, 950B, 950C, 950D so that the probe may be wedged in between consecutive fins of evaporator coil 400, with holders for probes 209, 214, and 219 located external of the fins.

FIG. 9B shows the example probe 900 of FIG. 9A wedged in between consecutive fins of evaporator 400, with probes 209, 214, and 219 located external of the fins.

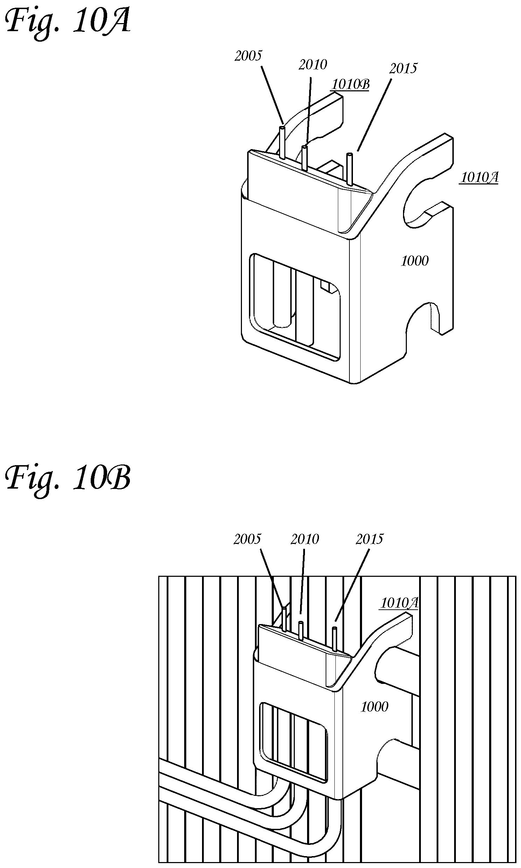

FIG. 10A shows a non-limiting example of a probe, in accordance with at least one alternative embodiment described and recited herein.

FIG. 10A shows latches 1010A and 1010B of a probe 1000 are configured to latch onto a consecutive tubes of an evaporator coil (e.g., evaporator coil 400 shown in Fig. 4). In the non-limiting example embodiment of FIG. 7, at least one of the latches 1010A, 1010B is disposed between consecutive fins of the evaporator coil 400. Probe 1000 is shown to have electrodes 2005, 2010, and 2015.

FIG. 10B shows the example probe of FIG. 10A mounted on an evaporator coil, in accordance with at least one embodiment described and recited herein.

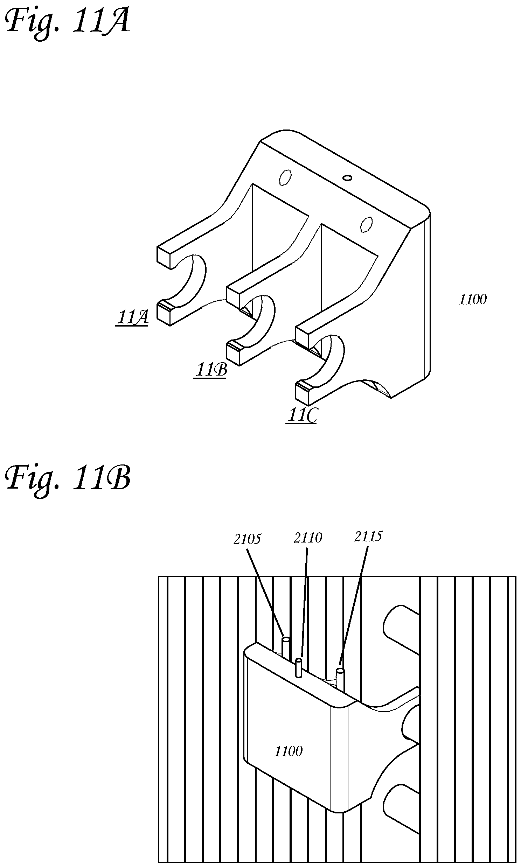

FIGS. 11A and 11B show a non-limiting example of a probe 1100, in accordance with at least one alternative embodiment described and recited herein, having multiple latches 11A, 11B, and 11C that each latch on to only one tube of an evaporator coil.

The non-limiting example embodiments and processing described and recited herein thus provide for efficient and cost-saving detection of frost and abatement thereof in a climate-controlling system.

### Aspects:

Aspect 1. A system to detect frost in an evaporator coil, comprising:
a controller; and
a probe comprising one or more electrodes, the probe being attached to a component of an evaporator coil, the probe being configured to report an environmental condition in proximity to the component of the evaporator coil to the controller,
   wherein the controller initiates and terminates a defrost operation based on the environmental condition reported by the probe.
Aspect 2. The system of Aspect 1, wherein the environmental condition includes a thickness of frost on the evaporator coil as measured by at least one of the electrodes.
Aspect 3. The system of either Aspect 1 or Aspect 2, wherein the probe is configured to:
   detect frost on the component of the evaporator coil;
   transmit the environmental condition in proximity to the component of the evaporator coil to the controller by transmitting data indicating the detection of frost on the component of the evaporator coil to the controller,
   wherein the controller is configured to initiate the defrost operation upon receiving the data indicating the detection of a threshold amount of frost on the component of the evaporator coil;
   detect reduction of frost on the component of the evaporator coil; and
   transmit the environmental condition in proximity to the component of the evaporator coil to the controller by transmitting data indicating the reduction of frost on the component of the evaporator coil,
   wherein the controller is configured to terminate the defrost operation upon receiving the data indicating the detection of a threshold reduction of frost on the component of the evaporator coil.
Aspect 4. The system of any one of Aspects 1 to 3, wherein the probe is attached so that the one or more electrodes are disposed between fins of the evaporator coil to detect frost or an absence of frost.
Aspect 5. The system of any one of Aspects 1 to 3, wherein the probe is attached so that one of the one or more electrodes is disposed within a predetermined distance from a fin of the evaporator coil to detect frost or an absence of frost.
Aspect 6. The system of any one of Aspects 1 to 5, wherein the data indicating the detection of a threshold amount of frost on the component of the evaporator coil is based on an increase of resistance between at least two of the electrodes.
Aspect 7. The system any one of Aspects 1 to 5, wherein the data indicating the detection of a threshold amount of frost on the component of the evaporator coil is based on an increase of resistance between one of the at least two of the electrode and a fin of the evaporator coil.
Aspect 8. The system of any one of Aspects 1 to 7, wherein the data indicating the reduction of frost on the component of the evaporator coil is based on a decrease of resistance between at least two of the electrodes.
Aspect 9. The system of any one of Aspects 1 to 5, wherein the data indicating the reduction of frost on the component of the evaporator coil is based on a decrease of resistance between one of the at least two of the electrode and a fin of the evaporator coil.
Aspect 10. The system of any one of Aspects 1 to 9, wherein the component of the evaporator coil includes at least one of a fin, a duct, or a drain pan.
Aspect 11. The system of any one of Aspects 1 to 9, wherein the component of the evaporator coil includes a surface of the evaporator coil.
Aspect 12. A controller method for regulating a buildup of frost, comprising:
   periodically receiving a measured resistance value between a pairing of at least two electrodes from a probe to which the at least two electrodes are configured, wherein
      the probe is attached to a component of an evaporator coil, and
      the probe is configured to transmit the measured resistance in proximity to the component of the evaporator coil to the controller;
   implementing a defrost operation when the periodically received measured resistance value is at least a threshold resistance value; and
   suspending the defrost operation when the periodically received measured resistance value is below threshold resistance value.
Aspect 13. The method of Aspect 12, further comprising:
   calculating a thickness of frost on the evaporator coil in proximity to the probe based on at least one received measured resistance value that is at least the threshold resistance value.
Aspect 14. The method of Aspect 12 or Aspect 13, wherein the defrost operation includes warming a heating element disposed in proximity to the probe.
Aspect 15. The method of any one of Aspects 11 to 13, wherein the defrost operation includes warming a heating bar having a portion thereof disposed in proximity to the probe.
Aspect 16. The method of any one of Aspects 11 to 13, wherein the controller implements the defrost operation when at least two consecutively received measured resistance values are at least the threshold resistance value.
Aspect 17. The method of any one of Aspects 11 to 16, wherein the controller suspends the defrost operation when at least two consecutively received measured resistance values are below the threshold resistance value.
Aspect 18. A method for regulating buildup of frost, comprising:
   periodically receiving a measured resistance between an electrode and a component of an evaporator from a probe to which the electrode is configured, wherein
      the probe is attached to a component of an evaporator coil, and
      the probe is configured to transmit the measured resistance in proximity to the component of the evaporator coil to the controller;
   implementing a defrost operation when the periodically received measured resistance is at least a threshold resistance value; and
   implementing a defrost operation when the periodically received measured resistance is below threshold resistance value.
Aspect 19. The method of Aspect 18, further comprising:
   calculating a thickness of frost on the evaporator coil in proximity to the probe based on at least one received measured resistance value that is at least the threshold resistance value.
Aspect 20. The method of Aspect 18 or Aspect 19, wherein
   the controller implements the defrost operation when at least two consecutively received measured resistance values are at least the threshold resistance value, and
   the controller suspends the defrost operation when at least two consecutively received measured resistance values are below the threshold resistance value.
Aspect 21. A frost detecting probe corresponding to a climate controlling component, the frost detecting probe comprising:
   one or more electrodes to:
   transmit an environmental condition in proximity to the climate controlling component to a controller indicating the detection of frost on the climate controlling component to the controller,
      wherein the controller is configured to initiate the defrost operation upon receiving the data indicating the detection of a threshold amount of frost on the component of the evaporator coil;
   transmit the environmental condition in proximity to the climate controlling component to the controller indicating reduction of frost on the climate controlling component; and
      wherein the controller is configured to terminate the defrost operation upon receiving the data indicating the detection of a threshold reduction of frost on the climate controlling component.
Aspect 22. The frost detecting probe of Aspect 21, wherein
   the climate controlling component is an evaporator, and
   the one or more probes are inserted between two fins of the evaporator.
Aspect 23. The frost detecting probe of Aspect 21 or Aspect 22, wherein the probe clips onto consecutive fins of the evaporator.
Aspect 24. The frost detecting probe of any of any Aspects 21 - 23, wherein the controller is initiate the defrost operation and terminate the defrost operation by transmitting instructions to an electrical heater bar within a predetermined proximity of the probe.

The terminology used in this Specification is intended to describe particular embodiments and is not intended to be limiting. The terms "a," "an," and "the" include the plural forms as well, unless clearly indicated otherwise. The terms "comprises" and/or "comprising," when used in this Specification, specify the presence of the stated features, integers, steps, operations, elements, and/or components, but do not preclude the presence or addition of one or more other features, integers, steps, operations, elements, and/or components.

With regard to the preceding description, it is to be understood that changes may be made in detail, especially in matters of the construction materials employed and the shape, size, and arrangement of parts without departing from the scope of the present disclosure. This Specification and the embodiments described are exemplary only, with the true scope and spirit of the disclosure being indicated by the claims that follow.

## Claims

1. A system to detect frost in an evaporator coil, comprising:
a controller; and
a probe comprising one or more electrodes, the probe being attached to a component of an evaporator coil, the probe being configured to transmit detection of an environmental condition in proximity to the component of the evaporator coil to the controller,
wherein the controller initiates and terminates a defrost operation based on the environmental condition reported by the probe.

2. The system of Claim 1, wherein the environmental condition includes a thickness of frost on the evaporator coil as measured by at least one of the electrodes.

3. The system of any one of Claims 1 and 2, wherein the probe is configured to:
detect frost on the component of the evaporator coil;
transmit detection of the environmental condition in proximity to the component of the evaporator coil to the controller by transmitting data indicating the detection of frost on the component of the evaporator coil to the controller,
wherein the controller is configured to initiate the defrost operation upon receiving the data indicating the detection of a threshold amount of frost on the component of the evaporator coil;
detect reduction of frost on the component of the evaporator coil; and
transmit the environmental condition in proximity to the component of the evaporator coil to the controller by transmitting data indicating the reduction of frost on the component of the evaporator coil,
wherein the controller is configured to terminate the defrost operation upon receiving the data indicating the detection of a threshold reduction of frost on the component of the evaporator coil.

4. The system of Claim 3, wherein the probe is attached so that the one or more electrodes are disposed between fins of the evaporator coil to detect frost or an absence of frost.

5. The system of Claim 3, wherein the probe is attached so that one of the one or more electrodes is disposed within a predetermined distance from a fin of the evaporator coil to detect frost or an absence of frost.

6. The system of any one of Claims 3-5, wherein the data indicating the detection of a threshold amount of frost on the component of the evaporator coil is based on an increase of resistance between at least two of the electrodes; and/or
wherein the data indicating the detection of a threshold amount of frost on the component of the evaporator coil is based on an increase of resistance between one of the at least two of the electrode and a fin of the evaporator coil; and/or
wherein the data indicating the reduction of frost on the component of the evaporator coil is based on a decrease of resistance between at least two of the electrodes; and/or
wherein the data indicating the reduction of frost on the component of the evaporator coil is based on a decrease of resistance between one of the at least two of the electrode and a fin of the evaporator coil.

7. The system of any one of Claims 3-5, wherein the data indicating the detection of a threshold amount of frost on the component of the evaporator coil is based on an increase of resistance between the one electrode and a fin of the evaporator coil; and/or
wherein the data indicating the reduction of frost on the component of the evaporator coil is based on a decrease of resistance between the one electrode and a fin of the evaporator coil.

8. The system of any one of Claims 1-7, wherein the component of the evaporator coil includes at least one of a fin, a duct, or a drain pan.

9. The system of any one of Claims 1-8, wherein the component of the evaporator coil includes a surface of the evaporator coil.

10. A controller method for regulating a buildup of frost, comprising:
periodically receiving a measured resistance value between a pairing of at least two electrodes from a probe to which the at least two electrodes are configured, wherein
the probe is attached to a component of an evaporator coil, and
the probe is configured to transmit the measured resistance in proximity to the component of the evaporator coil to the controller;
implementing a defrost operation when the periodically received measured resistance value is at least a threshold resistance value; and
suspending the defrost operation when the periodically received measured resistance value is below threshold resistance value.

11. The method of Claim 10, further comprising:
calculating a thickness of frost on the evaporator coil in proximity to the probe based on at least one received measured resistance value that is at least the threshold resistance value.

12. The method of any one of Claims 10-11, wherein the defrost operation includes warming a heating element disposed in proximity to the probe; and/or
wherein the defrost operation includes warming a heating bar having a portion thereof disposed in proximity to the probe.

13. The method of any one of Claims 10-12, wherein the controller implements the defrost operation when at least two consecutively received measured resistance values are at least the threshold resistance value.

14. The method of any one of Claims 10-13, wherein the controller suspends the defrost operation when at least two consecutively received measured resistance values are below the threshold resistance value.

15. A method for regulating buildup of frost, comprising:
periodically receiving a measured resistance between an electrode and a component of an evaporator from a probe to which the electrode is configured, wherein
the probe is attached to a component of an evaporator coil, and
the probe is configured to transmit the measured resistance in proximity to the component of the evaporator coil to the controller;
implementing a defrost operation when the periodically received measured resistance is at least a threshold resistance value; and
implementing a defrost operation when the periodically received measured resistance is below threshold resistance value.
